# Europäisches Patentamt
## European Patent Office
## Office européen des brevets

(11) Veröffentlichungsnummer: **0 309 774 B1**

(12) # EUROPÄISCHE PATENTSCHRIFT

(45) Veröffentlichungstag der Patentschrift: **19.11.92**

(51) Int. Cl.⁵: **G02F 1/137**

(21) Anmeldenummer: **88114497.6**

(22) Anmeldetag: **06.09.88**

(54) **Ferroelektrische Flüssigkristallzelle.**

(30) Priorität: **18.09.87 CH 3607/87**
**21.09.87 CH 3640/87**
**25.09.87 CH 3722/87**
**26.04.88 CH 1555/87**

(43) Veröffentlichungstag der Anmeldung:
**05.04.89 Patentblatt 89/14**

(45) Bekanntmachung des Hinweises auf die
Patenterteilung:
**19.11.92 Patentblatt 92/47**

(84) Benannte Vertragsstaaten:
**CH DE FR GB IT LI NL SE**

(56) Entgegenhaltungen:
**EP-A- 0 219 840**
**GB-A- 2 198 743**
**US-A- 4 715 688**

**Patent Abstracts of Japan, Band 7, Nr. 14
(C-146)(1159), 20.1.1983**

**Patent Abstracts of Japan, Band 7, Nr. 131
(C-169)(1276), 8.6.1983**

**Patent Abstracts of Japan, Band 9, Nr.
1(C-259)(1724), 5.1.1985**

(73) Patentinhaber: **F. HOFFMANN-LA ROCHE AG
Postfach 3255
CH-4002 Basel(CH)**

Patentinhaber: **NIOPIC MOSCOW RESEARCH
AND PRODUCTION ASSOCIATION
B. Sadovaya 1/4
Moskau 103787(SU)**

(72) Erfinder: **Beresnev, Leonid Alexeevich, Dr.
Acad. Pilyugin St. 26 Flat 285
117393 Moskau(SU)**
Erfinder: **Chernova, Nina Ivanovna, Dr.
Shchelkovskoye Highway 86 Flat 100
105523 Moskau(SU)**
Erfinder: **Chigrinov, Vladimir Grigorievich, Dr.
Svobody St. 73 Flat 35
123481 Moskau(SU)**
Erfinder: **Dergachev, Dmitry Ivanovich, Dr.
Bogdanow St. 48-2 Flat 127
119620 Moskau(SU)**
Erfinder: **Ivashchenko, Alexander Vasilievich,
Prof. Dr.
Pervomayskaya St. 44a Flat 57
141700 Dolgoprudny Moskau Region(SU)**

Rank Xerox (UK) Business Services

EP 0 309 774 B1

EP 0 309 774 B1

**Molecular Crystal and Liquid Crystals, Band 94, Nr. 1/2, 1983, S. 213-234; Gordon & Breach Sc. Publ. Inc., New York, US N.A. CLARK et al:"Ferro-electric liquid crystal electro-optics using the surface stabilized structure"**

**Molecular Crystal and Liquid Crystals, Band 114, Nr. 1/3, 1984, S. 151-187; Gordon & Breach Sc. Publ. Inc., New York, US S.T. LAGERWALL et al."Ferro-electric liquid crystals"**

Erfinder: **Loseva, Marina Vasilievna, Dr.**
**Festivalnaya St. 65 Flat 214**
**125502 Moskau(SU)**
Erfinder: **Ostrovskiy, Boris Isaakovich, Dr.**
**Profsoyuznaya St. 156-1 Flat 197**
**117465 Moskau(SU)**
Erfinder: **Pozhidaev, Evgeniy Pavlovich, Dr.**
**Yablochkov St. 21-2 Flat 43**
**127322 Moskau(SU)**
Erfinder: **Rabinovich, Arnold Zinovievich, Dr.**
**Gastello St. 8 Flat 9**
**107014 Moskau(SU)**
Erfinder: **Schadt, Martin, Dr.**
**Liestalerstrasse 77**
**CH-4411 Seltisberg(CH)**
Erfinder: **Titov, Victor Vasilievich, Prof. Dr.**
**Festivalnaya St. 12 Flat 95**
**125414 Moskau(SU)**

(74) Vertreter: **Buntz, Gerhard et al**
**Grenzacherstrasse 124 Postfach 3255**
**CH-4002 Basel(CH)**

## Beschreibung

Die Erfindung betrifft eine Flüssigkristallanzeigezelle mit einer chiralen ferroelektrischen smektischen Flüssigkristallschicht, deren Helixstruktur durch Einwirkung eines elektrischen Feldes derart beeinflusst wird, dass sich ihre optische Anisotropie ändert, einem Paar den Flüssigkristall einschliessender, transparenter Platten, die mit einer die Moleküle des Flüssigkristalls ausrichtenden Oberflächenstruktur und mit Elektroden zur Erzeugung eines elektrischen Feldes im Flüssigkristall versehen sind, und je einem Polarisator vor und hinter dem Flüssigkristall.

Der Effekt der Deformation einer Helixstruktur der vorstehenden Art durch ein elektrisches Feld ist in Ostrovski, B.I., Advances in Liquid Cystal Research and Applications, Oxford/Budapest, 1980, Seiten 469 ff. beschrieben. Der Effekt wird in der Literatur gelegentlich mit der Abkürzung DHF für "Distorted Helix Ferroelectric" bezeichnet. In dem erwähnten Artikel wurde die Möglichkeit der Modulation eines Lichtstrahls mit einer Frequenz von 1 kHz und mit einem elektrischen Feld von weniger als $6x10^{-3}$ V/cm in Betracht gezogen. In der Folge schien sich jedoch herauszustellen, dass auf der Grundlage dieses Effekts keine praktisch brauchbare elektrooptische Zelle zu verwirklichen ist.

Ein bekannter, jedoch anders gearteter Effekt ist der sog. Surface Stabilized Ferroelectric Liquid Crystal (SSFLC) Effekt von Lagerwall und Clark, bei dem ferroelektrische Flüssigkristalle in einer unverdrillten Konfiguration zur Anwendung kommen. Dieser Effekt ist in Mol. Cryst. Liq. Cryst. 94 (1983), 213-234 und 114 (1984), 151-187 beschrieben.

Der Erfindung liegt die Aufgabe zugrunde, eine DHF-Zelle bereitzustellen, die neben den bekannten Vorzügen des DHF-Effekts die für einen praktischen Einsatz als Lichtventil oder Anzeigezelle erforderlichen Eigenschaften aufweist.

Erfindungsgemäss wird dies erreicht durch eine DHF-Zelle der eingangs angegebenen Art, die sich dadurch auszeichnet, dass das Verhältnis d/p der Dicke d der Flüssigkristallschicht zur Ganghöhe p der schraubenförmigen Verdrillung grösser ist als 5, der smektische Kippwinkel $\theta_o$ zwischen 22,5° und 50° liegt und das Produkt $d \cdot \theta_o^2 \cdot \Delta n \cdot 1/\lambda$ grösser ist als 0,1 $\mu$m. $\Delta n$ ist die Doppelbrechung und $\lambda$ die Wellenlänge des Lichts.

Im folgenden werden anhand der beiliegenden Zeichnungen Ausführungsbeispiele der Erfindung beschrieben. Es zeigen

Fig. 1  eine schematische perspektivische Darstellung eines kleinen Ausschnitts aus einer Flüssigkristallzelle nach einer bevorzugten Ausführungsform der Erfindung,

Fig. 2  eine graphische Darstellung der Abhängigkeit der Speicherzeit von der angelegten Spannung.

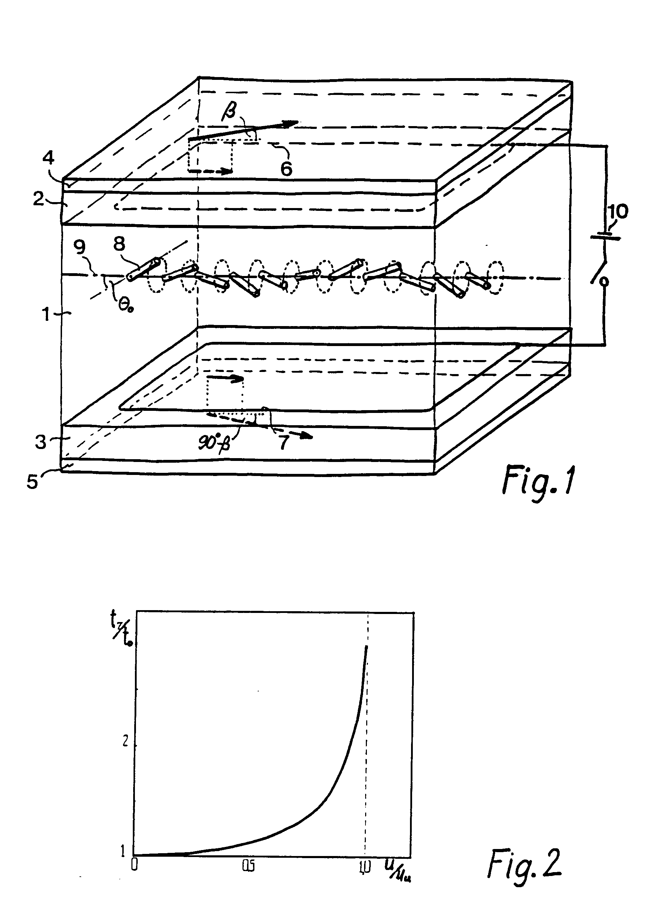

Wie in Fig. 1 gezeigt, besteht die vorliegende Flüssigkristallzelle aus einer Flüssigkristallschicht 1, die zwischen zwei im wesentlichen zueinander planparallelen Platten 2,3 aus durchsichtigem Material, z.B. Glas, Acrylglas, Kunststofffolien etc. angeordnet ist. Vor der vorderen Platte 2 befindet sich ein Polarisator 4, der vorzugsweise mit der Platte verbunden, beispielsweise aufgeklebt ist. Entsprechend ist der hinteren Platte 3 ein Polarisator 5 zugeordnet. Die Platten haben einen Abstand d voneinander.

Auf ihren dem Flüssigkristall zugewandten Oberflächen weisen die Platten 2, 3 die üblichen, zur Darstellung von Zeichen oder Bildpunkten segmentierten Elektrodenbeschichtungen auf. Auf dem hier dargestellten Ausschnitt aus einer Zelle ist lediglich ein einzelnes Elektrodensegment 6 auf der Platte 2 und ein gegenüberliegendes Elektrodensegment 7 auf der rückwärtigen Platte 3 gezeigt.

Die dem Flüssigkristall zugewandten Oberflächen sind ausserdem so behandelt, dass sie auf die angrenzenden Flüssigkristallmoleküle eine Richtwirkung ausüben und damit die Richtung des Direktors bestimmen. Diese Behandlung besteht beispielsweise im Reiben der Oberfläche in einer Richtung zur Erzielung einer planaren Orientierung. Andere Möglichkeiten sind das Schrägaufdampfen orientierender Schichten, etc. Das Ergebnis dieser Behandlung wird für den Zweck dieser Beschreibung als Oberflächenorientierung bezeichnet. Die Oberflächenorientierung auf den beiden Platten ist durch Pfeile dargestellt. Auf der hinteren Platte 3 ist die Oberflächenorientierung zu dergenigen auf der vorderen Platte parallel. Ausser planarer Oberflächenorientierung können auch homöotrope Orientierung oder Kombinationen aus beiden in Frage kommen.

Der zur vorderen Platte gehörende Polarisator 4 ist so angeordnet, dass er mit der Richtung der Oberflächenorientierung bzw. mit der Helixachse einen Winkel $\beta$ einschliesst. Der zur rückseitigen Platte gehörige Polarisator ist gegen den vorderen Polarisator um ein Winkel von 90° verdreht. Diese Anordnung der Polarisatoren stellt ein bevorzugtes Ausführungsbeispiel dar. Es sind andere Polarisatoranordnungen möglich, mit denen ebenfalls gute Ergebnisse erzielbar sind. Die geeigneten Polarisatoranordnungen sind ohne weiteres durch einfaches Optimieren bestimmbar.

Der Flüssigkristall 1 ist ein chiraler smektischer ferroelektrischer, in der Literatur häufig als smektisch C bezeichneter Flüssigkristall. Solche Flüssigkristalle sind aus der Literatur bekannt. Sie zeichnen sich dadurch aus, dass ihre Moleküle nicht senkrecht zu den smektischen Ebenen, sondern unter einem bestimmten Winkel, dem smektischen Kippwinkel $\theta_o$, angeordnet sind. Die Chiralität besteht darin, dass die Molekülrichtungen nicht in allen Schichten zueinander parallel sind, sondern von Schicht zu Schicht gegeneinander verdreht sind, sodass insgesamt eine schraubenförmige Verwindung entsteht. Bei planarer Oberflächenorientierung ist die Achse dieser schraubenförmigen Verdrillung parallel zu den Platten ausgerichtet. In Fig. 1 ist jeweils ein Molekül 8 pro smektische Schicht und die sich von Schicht zu Schicht fortsetzende schraubenförmige Verwindung der Moleküle gegeneinander entlang einer Helixachse 9 gezeigt. Der smektische Kippwinkel $\theta_o$ ist der Winkel zwischen der Moleküllängsachse und der Helixachse 9. Die Ganghöhe der Helix im feldfreien Zustand des Flüssigkristalls ist $p_o$.

Wird an die Elektroden 6 und 7 eine Spannung angelegt, so entsteht im flüssigen Kristall ein elektrisches Feld, das eine Umorientierung der Moleküle bewirkt. Von der symbolisch angedeuteten Spannungsquelle 10 kommen im praktischen Fall periodische Signale oder auch Ansteuerimpulse, die bei der vorliegenden Zelle, wie nachstehend noch im einzelnen erläutert, gegensinnige Polarität haben können.

Im Ruhezustand, d.h. ohne angelegtes elektrisches Feld, zeigt die Zelle eine bestimmte Lichtdurchlässigkeit. Durch Anlegen eines elektrisches Feldes wird die Helixanordnung der Moleküle deformiert, was eine Aenderung der Lichtdurchlässigkeit zur Folge hat. Zwischen den beiden Zuständen besteht ein optischer Kontrast. Die durch das elektrische Feld hervorgerufene Deformation der Schraubenstruktur bewirkt im wesentlichen eine Aenderung der Ganghöhe.

Je nach der Abhängigkeit der Intensität des Lichts von der angelegten Spannung sind zwei verschiedene Betriebsarten möglich, nämlich die lineare, bei der die Intensität zur angelegten Spannung direkt, und die quadratische, bei der die Intensität zum Quadrat der Spannung proportional ist.

Der Effekt tritt auf, wenn der die flüssigkristalline Struktur durchlaufende Lichtstrahl eine Apertur a vorfindet, die mehreren Perioden $p_o$ der schraubenförmigen Struktur entspricht. Auf diese Weise wird die elektrooptische Ausgangswirkung entlang der Schraubenrichtung gemittelt.

Gegenüber Effekten, bei denen die schraubenförmige Struktur vollständig aufgehoben wird, z.B. dem sog. SSFLC-Effekt, besteht eine Reihe von wichtigen Unterschieden.

1. Die Betriebsspannung hängt ab vom smektischen Kippwinkel $\theta_o$, der Polarisation $P_c$ im unverdrillten Zustand, dem Verhältnis von Schichtdicke zur Ganghöhe $d/p_o$ und ist im allgemeinen niedriger als die zur Aufhebung der Helix benötigte Spannung $U_u$. Durch Erhöhung des Verhältnisses von Schichtdicke d zu Ganghöhe $p_o$ und Vergrösserung des smektischen Kippwinkels $\theta_o$ ist es möglich, den Betriebsspannungsbereich zu erweitern.

2. Der Effekt besitzt eine gute Modulationstiefe und ein hohes Kontrastverhältnis sowie eine zur angelegten Spannung ungefähr proportionale Grauskala.

3. Der Effekt erlaubt eine durch die angelegte Spannungsamplitude gesteuerte Speicherung. Die Zeit $t_o$ bis zur Rückkehr der Struktur zur ursprünglichen ungestörten Helixform ist abhängig von der Viskosität und den elastischen Konstanten des Flüssigkristallmaterials, sowie von der Helixganghöhe. Ausserdem wird die Speicherzeit von den Oberflächenbedingungen beeinflusst. Für niedrige Werte der Ganghöhe kann die Speicherzeit von sehr kleinen Werten von etwa 10-100 $\mu$sec. bis zu grossen Werten von 5-10 sec. variiert werden.

4. Der Effekt beruht auf geringen Variationen der Direktor-Orientierung und verändert die Desinklinationswände im Anzeigebereich nicht. Infolgedessen sind Verzögerungszeiten im Anzeigebetrieb nicht zu beobachten.

5. Der Effekt ist bei planarer Konfiguration nicht empfindlich in Bezug auf die Wandorientierung. Die üblichen Methoden zur Wandorientierung wie bei nematischen Flüssigkristallen können verwendet werden.

6. Der Effekt erlaubt die Anwendung von bipolaren Signalen als auch von harmonischen Feldern mit einer charakteristischen Frequenz f.

7. Mit geeigneten Steuersignalen können mit dem Effekt auch optische Phasenunterschiede in der Flüssigkristallschicht so hervorgerufen werden, dass eine Farbumschaltung möglich ist.

Wie bereits erwähnt, sind bevorzugte Parameter ein Verhältnis von Dicke d zu Ganghöhe $p_o$ von mehr als 5, besonders bevorzugt mehr als 10. Der smektische Kippwinkel sollte bevorzugt 22,5 bis 50° und besonders bevorzugt 25° bis 40° betragen. Ferner sollte der Wert für den sog. Phasenfaktor

$$\frac{d\theta_o^2 \Delta n}{\lambda}$$

grösser als 0,45, besonders bevorzugt grösser als 1 sein.

Der Flüssigkristall besteht beim vorliegenden Ausführungsbeispiel aus folgender Mischung: 26,1 Gew.% 5-Octyl-2-[p-(octyloxy)phenyl]pyrimidin, 17,1 Gew.% 5-Octyl 2-[p-(nonyloxy)phenyl]pyrimidin, 24,5 Gew.% 5-Octyl-2-[p-(decyloxy)phenyl]pyrimidin und 32,3 Gew.% eines chiralen Zusatzstoffes, der im Flüssigkristallgemisch eine hohe spontane Polarisation induziert, chemisch stabil, farblos und gut löslich ist in üblichen Flüssigkristallmaterialien, insbesondere in ferroelektrischen smektischen Flüssigkristallen.

Das Flüssigkristallmaterial mit getilteter smektischer Phase kann aus üblichen Materialien bestehen. Bevorzugt sind Materialien mit einer smektisch C-Phase, wie Derivate von Phenylpyrimidin, Phenylpyridin, Phenylbenzoat, Benzoesäurebiphenylester, 4-Biphenylcarbonsäure-phenylester mit einer smektisch C-Phase.

In der Zelle mit dieser Flüssigkristallmischung beträgt die Ganghöhe $P_o$ 0,3 bis 0,4 $\mu$ bei 25°C, die Doppelbrechung $\Delta n = 0,25$. Der smektische Kippwinkel $\theta_o$ beträgt ca. 29° bei Raumtemperatur. Die spontane Polarisation $P_c$ beträgt ca. $7 \cdot 10^{-8}$ c/cm$^2$ bei 25°C. Die Rotationsviskosität beträgt ca. 1 Poise. Die Flüssigkristallschicht in der Zelle hat eine Dicke von 3,6 $\mu$m. Die Spannung $U_u$ für die vollständige Aufhebung der Schraubenstruktur liegt bei ca. 2 V. Für diese Zelle beträgt die Ansprechzeit ungefähr 200 $\mu$sec. Die Ansprechzeit ist für den gesamten Bereich der angelegten Spannung $O<U<U_u$ annähernd gleich lang.

Die bevorzugten Werte für den Winkel $\beta$ sind $\beta = 22,5°$ ($\frac{\pi}{8}$) oder $\beta = 67,5°$ ($\frac{3\pi}{8}$) für die lineare Betriebsart und $\beta = 0°$, $\beta = 45°$ ($\frac{\pi}{8}$), $\beta = 90°$ ($\frac{\pi}{2}$) für die quadratische Betriebsart.

Die so aufgebaute Zelle zeigt einen Kontrast von mehr als 100:1. In der folgenden Tabelle sind die Intensitätswerte I für eine Reihe von Spannungsamplituden angegeben. Die Spannung besteht aus Rechteckimpulsen. Die Werte gelten für die lineare Betriebsart.

Tabelle

| U [V] | I [%] |
|-------|-------|
| 0 | 1 |
| 0,15 | 10 |
| 0,25 | 20 |
| 0,45 | 35 |
| 0,6 | 55 |
| 1,0 | 90 |
| 1,5 | 99 |
| 1,75 | 98 |
| 2,0 | 97 |
| 2,45 | 80 |
| 2,6 | 65 |
| 2,95 | 50 |
| 3,3 | 40 |
| 4,0 | 35 |
| 5,15 | 35 |

Der maximale Intensitätswert ist 100%. Die ersten Werte im Spannungsbereich von 0 bis 2 Volt geben die erzielbare Grauskala wieder. Oberhalb von 2 Volt wird der Kontrast geringer, was auf den höheren smektischen Kippwinkel zurückzuführen ist. Bei Spannungen über 4,0 Volt wird die Helix vollständig abgewickelt.

**Patentansprüche**

**1.** Flüssigkristallanzeigezelle mit einer chiralen ferroelektrischen smektischen Flüssigkristallschicht, deren Helixstruktur durch Einwirkung eines elektrischen Feldes derart beeinflusst wird, dass sich ihre optische Anisotropie ändert, einem Paar den Flüssigkristall einschliessender, transparenter Platten, die mit einer die Moleküle des Flüssigkristalls ausrichtenden Oberflächenstruktur und mit Elektroden zur Erzeugung eines elektrischen Feldes im Flüssigkristall versehen sind, und je einem Polarisator vor und hinter dem Flüssigkristall, dadurch gekennzeichnet, dass das Verhältnis d/p der Dicke d der Flüssigkristallschicht zur Ganghöhe p der schraubenförmigen Verdrillung grösser ist als 5, der smektische Kippwinkel $\theta_o$ zwischen 22,5° und 50° liegt und das Produkt $d \cdot \theta_o^2 \cdot \Delta n \cdot 1/\lambda$ (Phasenfaktor) aus der Dicke d, dem

Quadrat des Kippwinkels $\theta_o$, dem Wert der Doppelbrechung $\Delta n$ und dem Reziprokwert der Lichtwellenlänge $\lambda$ grösser ist als 0,45 $\mu$m.

2. Flüssigkristallanzeigezelle nach Anspruch 1, dadurch gekennzeichnet, dass das Verhältnis d/p grösser ist als 10.

3. Flüssigkristallanzeigezelle nach Anspruch 1, dadurch gekennzeichnet, dass $\theta_o$ = 29° ist.

4. Flüssigkristallanzeigezelle nach Anspruch 1, dadurch gekennzeichnet, dass der Phasenfaktor grösser als 1 ist.

5. Flüssigkristallanzeigezelle nach Anspruch 1, dadurch gekennzeichnet, dass der Winkel $\beta$ zwischen der Helixachse und der Polarisationsrichtung des eingangsseitigen Polarisators 22,5° oder 67,5° beträgt für eine Betriebsart der Zelle, bei der die Intensität des durchgehenden Lichts proportional zur angelegten Spannung ist.

6. Flüssigkristallanzeigezelle nach Anspruch 1, dadurch gekennzeichnet, dass der Winkel $\beta$ zwischen der Helixachse und der Polarisationsrichtung des eingangsseitigen Polarisators 0°, 45° oder 90° beträgt für eine Betriebsart der Zelle, bei der die Intensität des durchgehenden Lichts proportional zum Quadrat der angelegten Spannung ist.

7. Flüssigkristallanzeigezelle nach Anspruch 1, dadurch gekennzeichnet, dass die Oberflächenstruktur der Platten eine die Flüssigkristallmoleküle planar ausrichtende Wirkung hat.

8. Flüssigkristallanzeigezelle nach Anspruch 1, dadurch gekennzeichnet, dass die Polarisatoren gekreuzt sind.

**Claims**

1. A liquid crystal display cell having: a chiral ferroelectric smectic liquid crystal layer whose helix structure is so influenced by the action of an electric field that its optical anisotropy alters; a pair of transparent plates between which the liquid crystal is disposed and which have a surface structure aligning the molecules of the liquid crystal and are provided with electrodes to produce an electric field therein; and one polariser each before and after the liquid crystal, characterised in that the ratio d/p of the thickness d of the liquid crystal layer to the pitch height p of the helical twisting is greater than 5, the smectic tilt angle $\theta_o$ is between 22.5° and 50° and the product $d.\theta_o^2.\Delta n .1/\lambda$ (phase factor) of the thickness d, the square of the tilt angle $\theta_o$, the value of the birefringence $\Delta n$ and the reciprocal of the wavelength $\lambda$ of light is greater than 0.45 $\mu$m.

2. A cell according to claim 1 , characterised in that the ratio d/p is greater than 10.

3. A cell according to claim 1 , characterised in that $\theta_o$ = 29°.

4. A cell according to claim 1, characterised in that the phase factor is greater than 1.

5. A cell according to claim 1, characterised in that the angle $\beta$ between the helix axis and the polarization direction of the input-side polariser is 22.5° or 67.5° when the cell is operated in a form in which the intensity of the transmitted light is proportional to the applied voltage.

6. A cell according to claim 1, characterised in that the angle $\beta$ between the helix axis and the polarization direction of the input-side polariser is 0° or 45° or 90° when the cell is operated in a form in which the intensity of the transmitted light is proportional to the square of the applied voltage.

7. A cell according to claim 1, characterised in that the surface structure of the plates has an effect aligning the liquid crystal molecules planarly.

8. A cell according to claim 1, characterised in that the polarisers are crossed.

6

**Revendications**

1. Cellule d'affichage à cristaux liquides avec couche de cristal liquide smectique ferroélectrique chiral, dont la structure en hélice est influencée par l'action d'un champ électrique de manière que son anisotropie optique se modifie, une paire de plaques transparentes comprenant le cristal liquide, qui sont munies d'une structure superficielle orientant les molécules du cristal liquide et d'électrodes pour produire un champ électrique dans le cristal liquide, et à chaque fois d'un polariseur devant et derrière le cristal liquide, caractérisée en ce que le rapport d/p de l'épaisseur d de la couche de cristal liquide à la hauteur de pas p de la torsade en forme de vis est supérieur à 5, en ce que l'inclinaison longitudinale $\theta_o$ est comprise entre 22,5° et 50° et en ce que le produit $d.\theta^2_o. n.1/$ (facteur de phase) de l'épaisseur d, du carré de l'inclinaison longitudinale $\theta_o$ de la valeur de la double réfraction n et de l'inverse de la longueur d'onde lumineuse est supérieur à 0,45 $\mu$m.

2. Cellule d'affichage à cristaux liquides selon la revendication 1, caractérisée en ce que le rapport d/p est supérieur à 10.

3. Cellule d'affichage à cristaux liquides selon la revendication 1, caractérisée en ce que $\theta_o = 29°$.

4. Cellule d'affichage à cristaux liquides selon la revendication 1, caractérisée en ce que le facteur de phase est supérieur à 1.

5. Cellule d'affichage à cristaux liquides selon la revendication 1, caractérisée en ce que l'angle $\beta$ compris entre l'axe de l'hélice et la direction de polarisation du polariseur du côté incident est de 22,5° ou de 67,5° pour un type de fonctionnement de la cellule dans lequel l'intensité de la lumière qui la traverse est proportionnelle à la tension appliquée.

6. Cellule d'affichage à cristaux liquides selon la revendication 1, caractérisée en ce que l'angle $\beta$ entre l'axe de l'hélice et la direction de polarisation du polariseur du côté incident est de 0°, 45° ou 90° pour un type de fonctionnement de la cellule dans lequel l'intensité de la lumière qui la pénètre est proportionnelle au carré de la tension appliquée.

7. Cellule d'affichage à cristaux liquides selon la revendication 1, caractérisée en ce que la structure superficielle des plaques a une action orientant dans le plan les molécules de cristaux liquides.

8. Cellule d'affichage à cristaux liquides selon la revendication 1, caractérisée en ce que les polariseurs sont croisés.

Fig.1

Fig.2